(19) Europäisches Patentamt
European Patent Office
Office européen des brevets

(11) Numéro de publication: **0 261 020 B1**

# (12) FASCICULE DE BREVET EUROPEEN

(45) Date de publication du fascicule du brevet: **12.12.90**

(51) Int. Cl.[5]: **C08J 5/04,** C08G 69/16, C08L 77/02, B29C 67/14

(21) Numéro de dépôt: **87402003.5**

(22) Date de dépôt: **08.09.87**

(54) **Procédé de fabrication de matériau composite à base de polyamide renforcé de fibres longues.**

(30) Priorité: **17.09.86 FR 8612997**

(43) Date de publication de la demande: **23.03.88 Bulletin 88/12**

(45) Mention de la délivrance du brevet: **12.12.90 Bulletin 90/50**

(84) Etats contractants désignés: **AT BE CH DE FR GB IT LI LU NL SE**

(56) Documents cités:
**EP-A- 0 056 703**
**EP-A- 0 114 971**
**FR-A- 2 027 878**
**FR-A- 2 031 719**

(73) Titulaire: **ATOCHEM, 4 & 8, Cours Michelet La Défense 10, F-92800 Puteaux(FR)**

(72) Inventeur: **Lottiau, Michel, 40, Val Beneton, F-27300 Bernay(FR)**
Inventeur: **Glemet, Michel, Rue Max Carpentier, F-27470 Serquigny(FR)**
Inventeur: **Cognet, Gilles, 128, Les Violettes Rue Ronsard, F-27300 Bernay(FR)**
Inventeur: **Causier, Alain, Bois d'Alençon, F-27300 Bernay(FR)**

(74) Mandataire: **Foiret, Claude et al, ATOCHEM Département Propriété Industrielle, F-92091 Paris la Défense 10 Cédex 42(FR)**

**EP 0 261 020 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé de fabrication de matériau composite à base de polyamide renforcé de fibres longues. Le procédé consiste à revêtir les fibres longues d'un prépolymère ou oligomère de polyamide et à chauffer l'ensemble pour réaliser la polymérisation avant pultrusion.

Il est connu d'extruder une résine thermoplastique, tel un polyamide, en présence de fibres pour améliorer ses propriétés mécaniques. Ce mode de mise en oeuvre présente toutefois l'convénient de conduire à un matériau contenant une très forte proportion de fibres courtes et en conséquence ne possédant pas les meilleures propriétés mécaniques, en particulier une excellente tenue à la flexion.

Les meilleures propriétés mécaniques des résines plastiques reforcées de fibres sont obtenues avec des résines renforcées de fibres longues. Pour réaliser ces composites à fibres longues on utilise habituellement la technique de pultrusion qui consiste à tirer au travers d'une filière chauffée des fibres en grande longueur préalablement imprégnées d'une résine plastique. Selon cette technique on fabrique des profilés composites, rectilignes ou courbes, hautement renforcées dans la direction principale et dont les caractéristiques mécaniques selon cette direction peuvent, sous réserve d'un choix cohérent, rivaliser avec certains métaux.

Dans cette technique l'imprégnation des fibres reste un point capital et délicat. Elle ne présente à priori pas de difficultés dans le cas où les fibres sont imprégnées de résines thermodurcissables, comme les époxydes ou polyesters, qui, à la température ambiante, se trouvent souvent à l'état liquide ou en solution. Plus difficile se montre l'imprégnation de fibres par une résine thermoplastique solide à la température ambiante et de point de fusion relativement élevé.

Les différentes techniques envisagées se sont révélées peu efficaces ou délicates à utiliser. C'est le cas par exemple de l'imprégnation des fibres par une poudre de polymère thermoplastique en lit fluidisé. C'est aussi le cas du passage des fibres dans une solution de polymère thermoplastique ; l'inconvénient principal de cette technique est l'élimination de grandes quantités de solvant.

Dans ces conditions, il est difficile de renforcer efficacement les polyamides par des fibres longues. Ces polymères thermoplastiques doivent être maintenus à des températures élevées pour être suffisamment fluides, afin de permettre une bonne imprégnation des fibres, ou fortement dilués dans un solvant d'où problème d'élimination dudit solvant.

La technique selon l'invention permet de remédier à ces inconvénients. Elle consiste à imprégner les fibres d'un prépolymère ou d'un oligomère de polyamide possédant à chaque extrémité de la chaîne moléculaire une fonction réactive susceptible de réagir d'une molécule à une autre molécule d'oligomère ou de prépolymère, puis à provoquer par chauffage l'allongement de la chaîne polymérique avant de conformer l'ensemble par pultrusion. Les fonctions réactives en extrémités de chaîne correspondent habituellement à une fonction amine et une fonction acide carboxylique par molécule.

Ces oligomères ou prépolymères de faibles masses moléculaires présentent l'avantage d'être fluides dès la température de fusion. Ces composés à séquences polyamides sont habituellement obtenus à partir de caprolactames, d'hexaméthylènediamine et d'acide adipique, d'hexaméthylènediamine et d'acide sebacique, de dodécalactame et d'acide undécanoïque. Ce peuvent être également des polyamidesimides. On peut citer à titre d'exemples les oligomères ou prépolymères de polyamides 6, 6.6, 6.10, 6.12, 11 et 12.

Les oligomères ou prépolymères particulièrement recommandés dans l'invention répondent à la formule générale

$$H-\left[HN-(CH_2)_m-\underset{\underset{O}{\|}}{C}-\right]_n-OH$$

dans laquelle

m est un nombre compris centre 5 et 11

n est un nombre compris entre 10 et 40

Les fibres, de préférence sous forme de fibres longues, c'est-à-dire de fibres continues ou rovings, généralement de verre, de carbone ou d'aramides tels que les fibres de KEVLAR®, sont imprégnées par circulation dans le prépolymère ou l'oligomère soit de préférence à l'état de poudre soit à l'état fondu. Lorsque l'imprégnation s'effectue dans la poudre, cette dernière se trouve de préférence sous forme fluidisée. La mise sous forme fluidisée s'effectue selon les méthodes connues de fluidisation des poudres.

Les fibres imprégnées subissent un traitement à chaud, à une température de préférence comprise entre 190 et 350°C de façon à parfaire l'imprégnation des fibres et à provoquer l'allongement des chaînes de polyamide. Les oligomères ou prépolymères préférés de la formule précédente se transforment en polymère tels que la valeur de n soit comprise entre 50 et 80.

Après ce traitement de polymérisation à chaud les fibres imprégnées de polymère sont tirées au travers d'une filière conformatrice maintenue à une température telle que le matériau se trouve à une température de préférence comprise entre 190 et 300°C. Afin de conserver au profilé une bonne structure

finale, il est recommandé de refroidir le matériau conformé dans un second conformateur maintenu à température ambiante.

En fonction des conditions de température et du rapport entre les poids de verre et de résine, les fibres imprégnées sont habituellement tirées dans l'ensemble de pultrusion à une vitesse comprise entre 0,3 et 3 mètres par minute.

Les exemples suivants illustrent l'invention sans la limiter.

EXEMPLE 1

Dans une cuve cubique de 500 mm de côté et dont le fond est poreux, on charge 25 kg d'une poudre de prépolymère de formule

$$H-\left[HN-(CH_2)_{10}-\underset{\underset{O}{\|}}{C}\right]_{21}-OH$$

Cette poudre possède une répartition granulométrique comprise entre 80 et 200 µm. La poudre est fluidisée en appliquant en fond de cuve une surpression de 2 bars d'air comprimé.

On fait passer dans le lit fluidisé 18 rovings R 099 P 103 ®VETROTEX (2400 Tex) à une vitesse de 0,5 m/min. Les fibres imprégnées sont préchauffées sous un panneau infra-rouge avant de passer dans une filière de 100 x 200 mm. maintenue à 270°C. En sortie, le matériau traverse une filière conformatrice de 50 x 50 mm maintenue à 240°C et située à environ 500 mm. de la première filière. La forme définitive du profilé est donnée en faisant passer le matériau dans une dernière filière conformatrice à température ambiante de 50 x 100mm.

Sue le matériau obtenu, on prépare des barreaux de section 4 x 10 mm. Les barreaux sont soumis aux essais de flexion trois points selon la norme ISO R-178.

Les résultats suivants sont obtenus sur des éprouvettes contenant 65 % de verre massique :

Module de YOUNG E = 26 GPa
Contrainte à la rupture = 450 MPa

A titre comparatif on remplace le prépolymère par le polymère de formule

$$H-\left[HN-(CH_2)_{10}-\underset{\underset{O}{\|}}{C}\right]_{65}-OH$$

Dans ce cas le module de YOUNG E est de 22 GPa et la contrainte à la rupture de 425 MPa.

EXEMPLE 2

On opère dans les conditions de l'exemple 1 avec le prépolymère de formule

$$H-\left[HN-(CH_2)_{11}-\underset{\underset{O}{\|}}{C}\right]_{19}-OH$$

Le module de YOUNG E = 20 GPa
La contrainte à la rupture = 400 MPa

EXEMPLE 3

On opère dans les conditions de l'exemple 1 avec le prépolymère de formule

$$H-\left[HN-(CH_2)_{5}-\underset{\underset{O}{\|}}{C}\right]_{35}-OH$$

la température de la première filière étant de 300°C au lieu de 270°C
Le module de YOUNG E = 23 GPa
La contrainte à la rupture = 593 MPa

EXEMPLE 4

On opère dans le conditions de l'exemple 1 avec le prépolymère de l'exemple 3 mais en remplaçant les fibres de verre par des fibres de KEVLAR®

Les résultats suivants sont obtenus sur des éprouvettes contenant 30 % en masse de KEVLAR® :
Module YOUNG E = 24 GPa
Contrainte à la rupture = 358 MPa

EXEMPLE 5

On opère dans les conditions de l'exemple 4 mais avec le prépolymère de formule

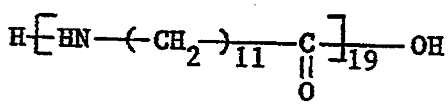

Le module de YOUNG E = 23 GPa
La contrainte à la rupture = 308 MPa

**Revendications**

1 - Procédé de fabrication de matériau composite à base de polyamide renforcé de fibres longues par imprégnation des fibres par un polyamide préalablement à une pultrusion caractérisé en ce que les fibres imprégnées d'un oligomère ou prépolymère de polyamide sont traitées à chaud pour provoquer l'allongement de la chaîne polymérique avant la conformation par pultrusion.

2 - Procédé selon la revendication 1 caractérisé en ce que l'oligomère ou le prépolymère possède à chaque extrémité de la chaîne moléculaire une fonction réactive susceptible de réagir d'une molécule à une autre molécule d'oligomère ou de prépolymère.

3 - Procédé selon l'une des revendications 1 à 2 caractérisé en ce que l'oligomère ou le prépolymère possède en extrémités de chaîne moléculaire une fonction amine et une fonction acide carboxylique.

4 - Procédé selon l'une des revendications 1 à 3 caractérisé en ce que l'oligomère ou le prépolymère est de formule

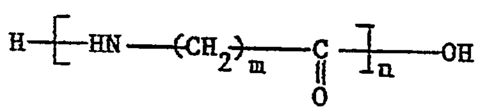

dans laquelle
m est un nombre compris entre 5 et 11
n est un nombre compris entre 10 et 40

5 - Procédé selon l'une des revendications 1 à 4 caractérisé en ce que les fibres imprégnées sont, préalablement à la pultrusion, chauffées à une température comprise entre 190 et 350°C.

6 - Procédé selon l'une des revendications 4 à 5 caractérisé en ce que les fibres imprégnées sont, préalablement à la pultrusion, chauffées de façon à transformer l'oligomère ou le prépolymère en polymère tel que la valeur de n soit comprise entre 50 et 80.

7 - Procédé selon l'une des revendications 1 à 6 caractérisé en ce que les fibres imprégnées de l'oligomère ou du prépolymère sont, après traitement à chaud, pultrudées dans une filière conformatrice à une température comprise entre 190 et 300°C.

8 - Procédé selon l'une des revendications 1 à 7 caractérisé en ce que la pultrusion s'effectue à une vitesse comprise entre 0,3 et 3 mètres par minute.

**Claims**

1. Process for the manufacture of composite material based on polyamide reinforced with long fibres by impregnating the fibres with a polyamide before a pultrusion, characterized in that the fibres impregnated with a polyamide oligomer or prepolymer are heat-treated to cause the lengthening of the polymer chain before the structuring by pultrusion.

2. Process according to Claim 1, characterized in that at each end of the molecular chain the oligomer or prepolymer has a reactive functional group capable of reacting from one molecule to another molecule of oligomer or of prepolymer.

3. Process according to either of Claims 1 to 2, characterized in that the oligomer or prepolymer has an amine functional group and a carboxylic acid functional group at molecular chain ends.

4. Process according to one of Claims 1 to 3, characterized in that the oligomer or the prepolymer is of formula

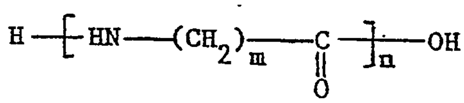

in which

m is a number between 5 and 11

n is a number between 10 and 40.

5. Process according to one of Claims 1 to 4, characterized in that before the pultrusion the impregnated fibres are heated to a temperature of between 190 and 350°C.

6. Process according to either of Claims 4 to 5, characterized in that before the pultrusion the impregnated fibres are heated so as to convert the oligomer or the prepolymer into a polymer such that the value of n is between 50 and 80.

7. Process according to one of Claims 1 to 6, characterized in that after the heat treatment the fibres impregnated with oligomer or prepolymer are pultruded through a structuring die at a temperature of between 190 and 300°C.

8. Process according to one of Claims 1 to 7, characterized in that the pultrusion takes place at a speed of between 0.3 and 3 metres per minute.

**Patentansprüche**

1. Verfahren zur Herstellung eines Kompositwerkstoffs auf der Grundlage von Polyamid, das mit langen Fasern durch Imprägnierung dieser Fasern mit einem Polyamid vor einer Pultrusion verstärkt wird, dadurch gekennzeichnet, daß die mit einem Polyamidoligomeren oder -vorpolymeren imprägnierten Fasern zur Einleitung des Verlängerungsvorgangs der Polymerkette vor der Formgebung durch Pultrusion wärmebehandelt werden.

2. Verfahren nach Anspruch 1, dadurch gekennzeichnet, daß das Oligomere oder des Vorpolymere an jedem Ende der Molekülkette eine reaktive Funktion aufweist, die in der Lage ist, von einem Oligomeren- oder Vorpolymerenmolekül zu einem anderen zu reagieren.

3. Verfahren nach Anspruch 1 oder 2, dadurch gekennzeichnet, daß das Oligomere oder das Vorpolymere an den Molekülkettenenden eine Amin- und eine Carbonsäurefunktion aufweist.

4.Verfahren nach einem der Ansprüche 1 bis 3, dadurch gekennzeichnet, daß das Oligomere oder das Vorpolymere die Formel

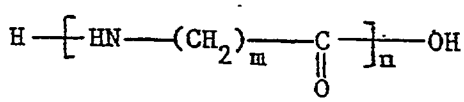

hat, worin

m eine Zahl zwischen 5 und 11 und

n eine Zahl zwischen 10 und 40 ist.

5. Verfahren nach einem der Ansprüche 1 bis 4, dadurch gekennzeichnet, daß die imprägnierten Fasern vor der Pultrusion auf eine Temperatur zwischen 190°C und 350°C erwärmt werden.

6. Verfahren nach einem der Ansprüche 4 oder 5, dadurch gekennzeichnet, daß die imprägnierten Fasern vor der Pultrusion derart erwärmt werden, daß das Oligomere oder das Vorpolymere in ein Polymeres umgewandelt wird, dessen Wert von n zwischen 50 und 80 beträgt.

7. Verfahren nach einem der Ansprüche 1 bis 6, dadurch gekennzeichnet, daß die mit dem Oligomeren oder dem Vorpolymeren imprägnierten Fasern nach der Wärmebehandlung in einer Formgebungsdüse bei einer Temperatur zwischen 190°C und 300°C pultrudiert werden.

8. Verfahren nach einem der Ansprüche 1 bis 7, dadurch gekennzeichnet, daß die Pultrusion bei einer Geschwindigkeit zwischen 0,3 und 3 Metern pro Minute durchgeführt wird.